# DEMANDE DE BREVET EUROPEEN

(11) **EP 4 521 010 A1**
(43) Date de publication de la demande: **12.03.2025**
(21) Numéro de dépôt: 24182158.6
(22) Date de dépôt: 14.06.2024
(51) Int. Cl.: F16L 3/24, F24D 3/14, F16L 3/237

(54) **DISPOSITIF DE FIXATION D'AU MOINS UN TUBE CONTRE UNE TIGE, PAR EXEMPLE UNE TIGE FILETEE OU UNE TIGE D'UN FERRAILLAGE DE BETON ARMEE**

(30) Priorité: 05.09.2023 FR 2309327
(71) Demandeur: François Inglese, 43000 Le Puy (FR)
(72) Inventeur: INGLESE, François, 43000 LE PUY-EN-VELAY (FR)
(74) Mandataire: Cabinet Laurent & Charras

(57) **Abrégé**

L'invention concerne un dispositif (1) de fixation d'un tuyau contre une tige, telle qu'une tige filetée, ou une tige d'un ferraillage pour béton armé, le dispositif (1) étant formé d'une seule pièce monobloc comprenant :
- deux parties (2) en forme de C reliées par une languette (3), les deux parties (2) en forme de C étant coaxiales et espacées l'une de l'autre d'une distance correspondant au moins au diamètre de la tige, chaque partie en forme de C présentant un diamètre et une ouverture adaptés pour le passage de la tige, les ouvertures des deux parties (2) étant opposées l'une de l'autre afin de permettre un verrouillage des parties (2) en forme de C sur la tige par un mouvement d'un quart de tour après engagement de la tige dans l'espace entre les deux parties (2) ;
- au moins un moyen d'encliquetage (4) d'un tube s'étendant orthogonalement des parties (2) en forme de C et étant ouvert selon une direction opposée aux parties (2) en forme de C pour l'encliquetage du tube orthogonalement à la tige après verrouillage des parties (2) en forme de C sur la tige.

## Description

### Domaine technique

L'invention concerne le domaine de la fourniture de matériel pour les plombiers, électriciens, ou autres artisans, nécessitant de fixer au moins un tube ou gaine contre un ferraillage de béton armé.

Plus largement, l'invention trouve une application avantageuse lorsqu'il s'agit de fixer au moins un tube le long d'une tige, par exemple une tige filetée ou une tige d'un ferraillage.

### Art antérieur

Dans le domaine du bâtiment, il est courant de vouloir fixer des tubes pour l'eau chaude sanitaire ou des gaines pour le passage de câbles électriques, le long d'un ferraillage ou treillis soudé d'un béton armé.

Le ferraillage se présente sous la forme d'une armature métallique constituée de tiges d'acier croisées et soudées aux points de maillage.

Pour ce faire, il est connu le document FR2535008 qui décrit une agrafe-support destinée aux installations de chauffage par le sol. Cette agrafe-support est utilisée pour fixer des tubes portant le fluide caloporteur sur un treillis supporté par une dalle porteuse dans le système de chauffage au sol.

Chaque agrafe-support comprend une embase avec une gorge pour recevoir un tronçon de treillis. Au-dessus de l'embase se trouve une partie d'agrafage élastique, conçue pour retenir le tube. Cette partie d'agrafage peut prendre différentes formes, comme des arceaux avec ou sans verrouillage.

Dans le système de chauffage de bâtiments par le sol, le tube portant le fluide caloporteur est maintenu perpendiculairement au treillis par les agrafes-supports. Les agrafes-supports peuvent être placées à volonté sur le treillis pour fixer le même tube de manière parallèle.

Cependant, ce document enseigne qu'on ne peut pas placer d'agrafes-supports entre deux tronçons de treillis parallèles, ce qui limite la possibilité de placer des tubes parallèlement à une distance inférieure à celle entre deux tronçons de treillis parallèles.

Ce document résout ce problème en proposant une agrafe-support dont la partie d'agrafage s'étend parallèlement à la direction longitudinale de la gorge. Cette agrafe-support a deux pattes opposées, l'une avec un élément mâle et l'autre avec un élément femelle conjugué de l'élément mâle.

Grâce à cette conception, les tubes peuvent être disposés parallèlement les uns aux autres perpendiculairement au tronçon de treillis, même à une distance inférieure au côté de la maille du treillis. Les agrafes-supports coopèrent les unes avec les autres par leurs éléments mâle et femelle, maintenant ainsi les agrafes-supports intermédiaires en place et empêchant leur basculement grâce à celles qui se trouvent aux points de croisement du treillis.

Il est également connu le document FR2728061 qui décrit un clip de fixation pour les tuyaux de chauffage d'une installation de chauffage par le sol. Ce clip peut être enclenché sur des barres d'un treillis soudé grâce à une fente ouverte vers le bas et dispose d'un creux en haut pour recevoir les tuyaux.

Ce dispositif présente une bague d'ancrage avec des évidements opposés et des ouvertures semblables à des trous, recouvertes par des loquets à ressort qui peuvent s'incliner pour permettre l'entrée d'une barre du treillis.

Cependant, la conception de ces dispositifs est complexe et les coûts sont multipliés lorsqu'il s'agit de fixer plusieurs tubes parallèles.

Par ailleurs, ces constructions ne sont pas adaptées lorsqu'il s'agit de fixer un tube long d'une tige filetée par exemple.

### Exposé de l'invention

L'un des buts de l'invention est donc de remédier aux problèmes de l'art antérieur en fournissant un dispositif de fixation d'un tuyau qui soit polyvalent pour permettre la fixation du tuyau aussi bien contre une tige filetée que contre une tige d'un ferraillage pour béton armé.

Un autre objectif est de fournir un tel dispositif dont la conception est simple, tout en présentant une tenue optimale contre la tige pour éviter les mouvements du tube.

Un autre objectif est de pouvoir fixer plusieurs tubes parallèlement, sans grever le coût de l'installation.

A cet effet, il a été mis au point un dispositif de fixation conçu pour fixer un tuyau contre une tige, telle qu'une tige filetée ou une tige utilisée dans un ferraillage pour béton armé. Le dispositif est formé d'une seule pièce monobloc, ce qui lui confère une grande simplicité de conception et de montage.

Le dispositif de fixation comprend deux parties en forme de C reliées par une languette. Les parties en forme de C sont coaxiales et espacées l'une de l'autre, avec une distance correspondant au moins au diamètre de la tige. Chaque partie en forme de C présente un diamètre et une ouverture adaptés pour permettre le passage de la tige. Les ouvertures des deux parties en forme de C sont opposées l'une à l'autre, ce qui permet de verrouiller les parties en forme de C sur la tige en effectuant un simple mouvement d'un quart de tour après avoir engagé la tige entre les deux parties.

Pour assurer un maintien solide du tuyau perpendiculairement à la tige, le dispositif de fixation comprend au moins un moyen d'encliquetage du tube, s'étendant orthogonalement aux parties en forme de C. Ce moyen d'encliquetage est ouvert selon une direction opposée aux parties en forme de C, ce qui permet d'encliqueter facilement le tube orthogonalement à la tige une fois que les parties en forme de C sont verrouillées sur la tige.

Ce dispositif est polyvalent en ce qu'il permet de fixer un tuyau aussi bien contre une tige filetée, que contre une tige d'un ferraillage pour béton armé.

Dans une variante avantageuse, les parties en forme de C sont pourvues de nervures longitudinales ménagées sur leur face interne, aussi appelées godrons, ce qui permet d'exercer une pression sur la tige et ainsi de maximiser la force de verrouillage entre le dispositif et la tige, ce qui évite au dispositif de tourner autour de la tige.

La languette qui relie les parties en forme de C peut comporter une nervure, située dans l'espace entre les parties en forme de C, qui présente deux configurations possibles. Lorsqu'elle est transversale, cette nervure s'engage dans un filet de la tige si celle-ci est filetée, permettant ainsi de régler la position du dispositif le long de la tige par vissage/dévissage du dispositif. Lorsqu'elle est longitudinale, la nervure exerce une pression sur le filet pour un réglage de position similaire.

Le moyen d'encliquetage du tube est de préférence constitué de deux branches élastiques formant une ouverture en forme de C ouverte vers le haut, par opposition aux parties en forme de C destinées à se verrouiller sur la tige qui sont vers le bas du dispositif, mais ouverte latéralement. Les extrémités des branches élastiques sont de préférence recourbées vers l'intérieur pour venir en contact avec le tube, ce qui assure un maintien ferme du tube encliqueté et lui permet de s'adapter à différentes tailles de tubes.

Dans certains cas, le tube peut être une gaine électrique ou posséder des cannelures ou rainures transversales, et une nervure est donc ménagée sur la face interne des branches élastiques pour s'engager dans cette rainure transversale et garantir une fixation sécurisée du tube, notamment axialement.

Enfin, le dispositif peut comprendre plusieurs moyens d'encliquetage positionnés côte à côte, ce qui permet de fixer simultanément au moins deux tubes parallèles, offrant ainsi une polyvalence accrue dans les applications où plusieurs tubes doivent être maintenus en place, sans grever le cout de revient d'un dispositif.

Grâce à sa conception monobloc, ses capacités de verrouillage sécurisé et son adaptabilité à différentes configurations de tubes et de tiges, le dispositif de fixation selon l'invention représente une solution pratique et efficace pour la fixation de tuyaux dans diverses applications industrielles et de construction.

### Brève description des dessins

La [Fig.1] est une vue en perspective d'un premier mode de réalisation du dispositif selon l'invention.
La [Fig.2] est une vue de côté d'une autre forme de réalisation du dispositif, intégrant des nervures.
La [Fig.3] illustre une vue similaire à celle de la figure 2, le dispositif comprenant deux moyens d'encliquetage de tubes.

### Description détaillée de l'invention

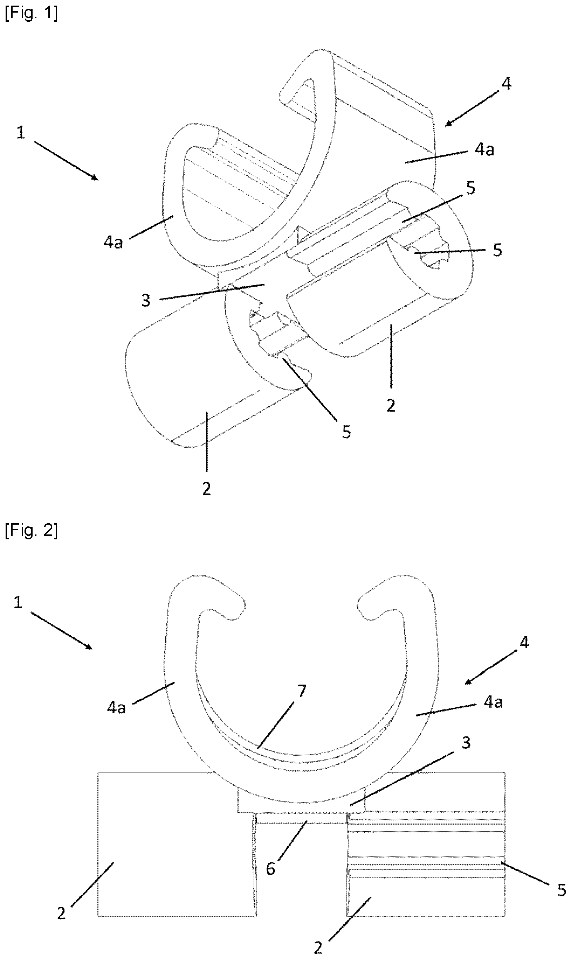

En référence aux figures 1 à 3, l'invention concerne un dispositif (1) de fixation, conçu pour fixer un tuyau contre une tige, telle qu'une tige filetée ou une tige d'un ferraillage pour béton armé.

Il est formé d'une seule pièce monobloc, comprenant deux parties (2) en forme de C reliées par une languette (3) ou patte. Les parties (2) en forme de C sont coaxiales et espacées l'une de l'autre d'une distance correspondant au moins au diamètre de la tige. En pratique, les parties (2) sont sous la forme de fourreaux ouverts latéralement pour l'engagement de la tige.

Chaque partie (2) en forme de C présente un diamètre et une ouverture adaptés pour permettre le passage de la tige. Les ouvertures des deux parties (2) en forme de C sont opposées l'une à l'autre, permettant un verrouillage des parties (2) en forme de C sur la tige par un mouvement d'un quart de tour après engagement de la tige entre les deux parties (2).

Le dispositif (1) de fixation est également pourvu d'au moins un moyen d'encliquetage (4) du tube, et de préférence deux, composé chacun de deux branches (4a) élastiques définissant une forme en C ouverte vers le haut. Les extrémités des branches (4a) élastiques sont recourbées vers l'intérieur pour venir en contact avec le tube, assurant ainsi un maintien ferme du tube encliqueté et lui permettant de s'adapter à différentes tailles de tubes.

Pour maximiser la force de verrouillage, les parties (2) en forme de C comporter des nervures longitudinales (5) ménagées sur leur face interne destinée à être en contact avec la tige, et ce pour maximiser l'effet de verrouillage autour de la tige et éviter la rotation ou le déplacement axial du dispositif sur la tige.

La languette (3) reliant les parties (2) en forme de C peut comporter une nervure (6) ménagée dans l'espace entre les parties (2) en forme de C, voir figure 2. Selon sa configuration, cette nervure (6) peut être transversale et s'engager dans un filet de la tige lorsque celle-ci est filetée, ou longitudinale, tel qu'illustrer, et exercer une pression sur ledit filet pour permettre le réglage de la position du dispositif (1) le long de la tige par vissage/dévissage du dispositif (1).

Dans certaines situations, où le tube est une gaine électrique ou possède des cannelures ou rainures transversales, et en référence à la figure 2, une nervure (7) complémentaire peut être ménagée sur la face interne le long des branches (4a) élastiques du moyen d'encliquetage (4) pour s'engager dans cette rainure, assurant ainsi un maintien axial et sécurisé du tube.

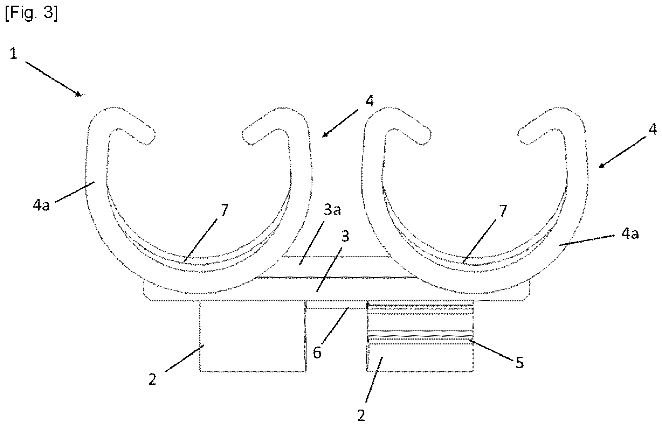

La figure 3 illustre un dispositif (1) de fixation comportant deux moyens d'encliquetage (4) positionnés côte à côte, permettant de fixer au moins deux tubes parallèles en même temps, offrant ainsi une polyvalence accrue dans les applications où plusieurs tubes doivent être maintenus en place.

Afin de rendre le dispositif plus solide, la languette (3) présente une nervure de rigidification (3a) reliant les deux moyens d'encliquetage (4).

En conclusion, le dispositif de fixation selon l'invention offre une solution pratique et efficace pour la fixation de tuyaux dans diverses applications industrielles et de construction. Sa conception monobloc, son mécanisme de verrouillage sécurisé et son adaptabilité à différentes configurations de tubes et de tiges en font un dispositif polyvalent et facile à utiliser pour les professionnels du bâtiment et de l'industrie.

## Revendications

1. Dispositif (1) de fixation d'un tuyau contre une tige, telle qu'une tige filetée, ou une tige d'un ferraillage pour béton armé, le dispositif (1) étant formé d'une seule pièce monobloc comprenant :
- deux parties (2) en forme de C reliées par une languette (3), les deux parties (2) en forme de C étant coaxiales et espacées l'une de l'autre d'une distance correspondant au moins au diamètre de la tige, chaque partie en forme de C présentant un diamètre et une ouverture adaptés pour le passage de la tige, les ouvertures des deux parties (2) étant opposées l'une de l'autre afin de permettre un verrouillage des parties (2) en forme de C sur la tige par un mouvement d'un quart de tour après engagement de la tige dans l'espace entre les deux parties (2) ;
- au moins un moyen d'encliquetage (4) d'un tube s'étendant orthogonalement aux parties (2) en forme de C et étant ouvert selon une direction opposée aux parties (2) en forme de C pour l'encliquetage du tube orthogonalement à la tige après verrouillage des parties (2) en forme de C sur la tige.

2. Dispositif (1) selon la revendication 1, ***caractérisé* en ce que** les parties (2) en forme de C comprennent des nervures longitudinales (5) ménagées sur une face interne destinée exercer une pression sur la tige.

3. Dispositif (1) selon l'une des revendications précédentes, ***caractérisé* en ce que** la languette (3) comprend une nervure (6) ménagée dans l'espace entre les parties (2) en forme de C.

4. Dispositif (1) selon la revendication 3, ***caractérisé* en ce que** la nervure (6) est transversale pour s'engager dans un filet de la tige lorsque celle-ci est filetée, ou bien longitudinale pour exercer une pression sur ledit filet afin de permettre le réglage de la position du dispositif (1) le long de la tige par vissage/dévissage du dispositif (1).

5. Dispositif (1) selon l'une des revendications précédentes, ***caractérisé* en ce que** le moyen d'encliquetage (4) du tube présente deux branches (4a) élastiques définissant une forme en C ouverte vers le haut.

6. Dispositif (1) selon la revendication 5, ***caractérisé* en ce que** les extrémités des branches (4a) élastiques sont recourbées vers l'intérieur pour venir en contact avec le tube afin de maintenir fermement le tube encliqueté, et de s'adapter aux différentes tailles de tubes.

7. Dispositif (1) selon l'une des revendications 5 à 6, ***caractérisé* en ce qu'**une nervure (7) est ménagée sur une face interne le long des branches (4a) élastique pour s'engager dans une rainure transversale d'un tube encliqueté.

8. Dispositif (1) selon l'une des revendications précédentes, ***caractérisé* en ce qu'**il comprend au moins deux moyens d'encliquetage (4) positionnés côte à côte pour fixer au moins deux tubes parallèles.
